# DEMANDE DE BREVET EUROPEEN

(11) **EP 1 858 203 A1**
(43) Date de publication de la demande: **21.11.2007**
(21) Numéro de dépôt: 07107555.0
(22) Date de dépôt: 04.05.2007
(51) Int. Cl.: H04L 12/28

(54) **Passerelle de communication entre réseaux de communication sans fil**

(30) Priorité: 19.05.2006 FR 0651855
(71) Demandeur: SCHNEIDER ELECTRIC INDUSTRIES SAS, 92500 Rueil-Malmaison (FR)
(72) Inventeur: Allard-Jacquin, Patrick, 38500, La Buisse (FR); Coutelou, Olivier, 38000, Grenoble (FR); Thonet, Gilles, 38240, Meylan (FR)
(74) Mandataire: Dufresne, Thierry

(57) **Abrégé**

L'invention concerne une passerelle de communication comprenant des moyens d'émission (11) et de réception (12) de messages pour communiquer avec au moins un noeud distant (30) sur un premier réseau de communication sans fil (5) selon un protocole incluant un contrôle d'accès au réseau. Les moyens de réception (12) sont aussi capables de recevoir des messages en provenance d'au moins un émetteur simple (20) émettant des messages sur un second réseau de communication sans fil (6) selon un protocole n'incluant pas de contrôle d'accès au réseau, et la passerelle (10) comprend une unité de traitement (15) capable de différencier les messages reçus provenant du premier réseau (5) et du second réseau (6).

## Description

La présente invention se rapporte à un système de communication capable d'échanger des messages au moyen de réseaux de communication sans fil, en particulier des réseaux de capteurs/actionneurs. Un tel système de communication peut par exemple se rencontrer dans des secteurs d'activité tels que les automatismes du bâtiment (commande d'éclairage, contrôle thermique, etc...), les automatismes industriels et le télérelevage (ou AMR : Automatic Meter Reading).

Dans la suite du document, on appellera "réseau de communication évolué" tout réseau dont le protocole de communication intègre la capacité d'effectuer un contrôle d'accès au réseau (couche MAC Medium Access Control). Le contrôle d'accès au réseau inclut aussi le contrôle du trafic entre les différents appareils (ou noeuds de communication) connectés au réseau. Par exemple, dans un réseau de communication évolué, le protocole peut prévoir un mécanisme d'écoute avant l'autorisation d'émettre, un mécanisme de ré-émission des messages avec "timeout" et "acknowledge". Les réseaux de communication évolués, de part les fonctionnalités qu'ils offrent (notamment CSMA, ré-émission automatique, acknowledge, maillage (meshing), ou autres ...), imposent donc aux noeuds de communication d'avoir la capacité d'être à la fois émetteur et récepteur. La technologie ZigBee est un exemple d'un tel réseau de communication par radiofréquences. Elle est décrite dans le document "ZigBee Specification V1.0" émanant de l'association "ZigBee Alliance". Pour les couches de communications les plus basses, cette technologie est actuellement conforme à la norme IEEE 802.15.4 et potentiellement aux normes IEEE 802.15.4b ou IEEE 802.15.4a.

Les noeuds de communication dialoguant sur un réseau de communication sans fil sont alimentés soit de façon classique par une alimentation externe (secteur), soit uniquement par une mini source d'énergie telle qu'une pile interne ou un dispositif temporaire de transformation d'énergie mécanique en énergie électrique. Dans ce dernier cas, pour favoriser une très basse consommation, le noeud de communication est normalement endormi ou en veille. Pour envoyer une information sur le réseau, il peut soit être réveillé périodiquement, soit être réveillé par une interruption (par exemple à la suite d'une action mécanique extérieure, dans le cas d'une télécommande, d'un interrupteur d'éclairage sans fil ou d'un détecteur fin de course sans fil).

Pour échanger des messages directement sur un réseau de communication évolué, le noeud qui vient de se réveiller devra généralement écouter le canal avant de prendre possession de ce dernier, envoyer son message sur le réseau de communication, attendre un retour d'information et ré-émettre éventuellement le message si le premier n'a pas été pris en compte.

La mise en oeuvre de ce type de protocole évolué impose alors au noeud de communication d'avoir des moyens de réception et de pouvoir rester dans une phase active pendant une durée pouvant aller jusqu'à plusieurs centaines de millisecondes. Ces phases d'émission/réception du noeud sont consommatrices d'une énergie non négligeable qui soit est prélevée sur la pile interne à chaque sollicitation et risque de la décharger prématurément, soit est incompatible avec l'énergie fournie par le dispositif temporaire de transformation d'énergie.

C'est pourquoi il existe déjà des noeuds de communication, appelés par la suite émetteurs simples et généralement alimentés par une mini source d'énergie, qui ne possèdent pas de moyens de réception de messages mais qui sont uniquement capables d'émettre par radio des messages courts en aveugle. De tels émetteurs simples ne peuvent donc pas être intégrés directement dans un réseau de communication évolué, mais peuvent uniquement communiquer à travers un réseau de communication dont le protocole de communication simplifié ne comporte pas de fonctionnalité de contrôle d'accès au réseau (couche MAC). Cependant, un tel protocole de communication simplifié rend le réseau vite incontrôlable s'il comprend par exemple plusieurs émetteurs simples communiquant avec plusieurs récepteurs via plusieurs répéteurs de messages (échos, encombrements, boucles,...). Un émetteur simple peut être par exemple un bouton sans fil et sans pile, tel qu'un bouton-poussoir, un interrupteur, un détecteur de type fin de course ou autres, dont la seule source d'énergie provient de l'actionnement de ce bouton, par transformation de l'énergie mécanique d'actionnement en énergie électrique pendant une durée brève.

Le document US 2005/171662 A1 décrit un système d'automatisme réparti dans un véhicule communiquant via un réseau de communication sans fil au moyens de "transceivers" (émetteurs/récepteurs) raccordés en étoile ou en réseau maillé. Mais, ce système décrit toujours un réseau homogène dans lequel l'ensemble des "transceivers" utilisent soit uniquement la couche physique PHY du protocole IEEE802.15.4, soit la couche physique PHY et la couche MAC du protocole IEEE802.15.4, soit un réseau ZigBee conforme à la norme IEEE802.15.4. Le document ne contient pas d'indication d'une passerelle de communication qui serait capable de recevoir des messages provenant indifféremment d'un réseau n'utilisant que la couche physique PHY de l'IEEE802.15.4 et d'un autre réseau utilisant la couche physique PHY et la couche MAC de l'IEEE802.15.4.

Pour émettre des messages vers des noeuds raccordés à un réseau de communication évolué sans fil, un émetteur simple doit donc passer par une passerelle de communication qui d'un côté est capable d'être en écoute permanente d'un message provenant de l'émetteur simple et d'un autre côté est capable de router ce message vers un autre destinataire à travers le réseau de communication évolué.

Néanmoins, la passerelle de communication doit alors comporter des premiers moyens de réception pour communiquer avec l'émetteur simple via un premier réseau de communication simple et des seconds moyens de réception pour communiquer avec d'autres noeuds via un second réseau de communication évolué. L'inconvénient de cette architecture est qu'elle nécessite d'implémenter deux technologies de communication au niveau de la passerelle : une première technologie pour l'émetteur/récepteur radio communiquant sur le réseau de communication évolué et une seconde technologie différente pour le récepteur radio dont la fonction est de capter le ou les message(s) en provenance de l'émetteur simple qui lui est associé. Cette double technologie au niveau d'une passerelle est génératrice de coûts additionnels importants.

C'est pourquoi l'objet de l'invention est de réduire sensiblement le coût d'une passerelle de communication qui soit capable à la fois d'envoyer et recevoir des messages avec des noeuds distants sur un premier réseau de communication évolué sans fil et de recevoir des messages d'un émetteur sur un second réseau de communication sans fil.

Pour cela, l'invention décrit une passerelle de communication comprenant des moyens d'émission et des moyens de réception de messages pour communiquer avec au moins un noeud de communication distant sur un premier réseau de communication sans fil selon un protocole incluant un contrôle d'accès au réseau. Lesdits moyens de réception sont également capables de recevoir des messages en provenance d'au moins un émetteur simple émettant des messages sur un second réseau de communication sans fil selon un protocole n'incluant pas de contrôle d'accès au réseau. La passerelle comprend une unité de traitement associée audits moyens de réception et capable de différencier les messages reçus provenant du premier réseau et les messages reçus provenant du second réseau de communication, en analysant une information d'en-tête contenue dans les messages reçus.

Selon une caractéristique, le protocole du premier réseau de communication et la couche physique du protocole du second réseau de communication sont conformes à la norme IEEE 802.15.4 ou la norme IEEE 802.15.4a ou la norme IEEE 802.15.4b.

Selon une autre caractéristique, la passerelle comporte un actionneur qui est commandé par l'unité de traitement suite à la réception d'un ordre de commande contenu dans un message provenant du premier réseau ou du second réseau de communication.

L'invention décrit également un système de communication comprenant une passerelle comportant des moyens d'émission et des moyens de réception de messages via un premier réseau de communication sans fil selon un protocole incluant un contrôle d'accès au réseau, au moins un noeud de communication distant capable de communiquer avec la passerelle sur le premier réseau de communication sans fil, au moins un émetteur simple capable d'émettre des messages sur un second réseau de communication sans fil selon un protocole n'incluant pas de contrôle d'accès au réseau. Lesdits moyens de réception de la passerelle sont également capables de recevoir des messages en provenance dudit émetteur simple, et la passerelle comprend une unité de traitement associée audits moyens de réception et capable de différencier les messages reçus provenant du premier réseau et les messages reçus provenant du second réseau de communication, en analysant une information d'en-tête contenue dans les messages reçus.

D'autres caractéristiques et avantages vont apparaître dans la description détaillée qui suit en se référant à un mode de réalisation donné à titre d'exemple et représenté par les dessins annexés sur lesquels :
- la figure 1 représente un exemple d'architecture simplifiée d'un système de communication conforme à l'invention,
- la figure 2 montre une représentation schématique des différentes couches de la pile logicielle de la passerelle.

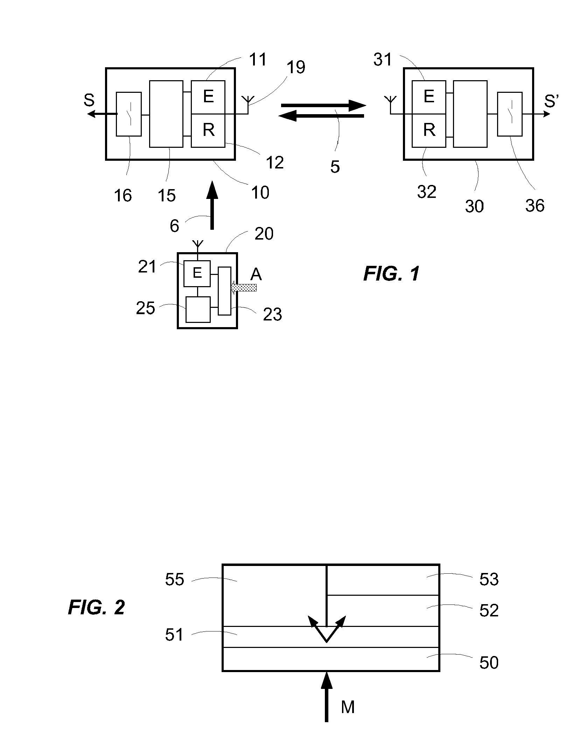

En référence à l'exemple de la figure 1, un système de communication sans fil comporte un émetteur simple 20, une passerelle de communication 10 et un appareil ou noeud de communication distant 30. La passerelle 10 communique avec l'appareil distant 30 via un premier réseau de communication sans fil 5 selon un premier protocole de communication évolué incluant une fonctionnalité de contrôle d'accès au réseau (couche MAC). De plus, la passerelle 10 communique avec l'émetteur simple 20 via un second réseau de communication sans fil 6 selon un second protocole de communication simplifié n'incluant pas de fonctionnalité de contrôle d'accès au réseau (couche MAC). Pour des raisons de simplification, la figure 1 ne comporte qu'un seul émetteur simple 20 et un seul noeud distant 30, mais il est clair que l'invention prévoit que la passerelle 10 peut communiquer avec plusieurs émetteurs simples et plusieurs noeuds distants.

L'émetteur simple 20 peut être un appareil du type bouton-poussoir, interrupteur (switch RF), télécommande radiofréquence, détecteur fin de course ou autres. Il comprend une unité de traitement électronique 25 (telle qu'un microcontrôleur ou une machine d'état) reliée à des moyens d'émission 21 (de type émetteur radio) capables d'émettre sur le second réseau de communication 6 à l'aide d'une antenne. L'émetteur simple 20 est alimenté par une mini source d'énergie 23. Indifféremment, cette mini source d'énergie 23 peut être une pile interne ou un convertisseur d'énergie mécanique en énergie électrique qui fournit temporairement une énergie électrique lorsqu'une action mécanique A est exercée sur l'émetteur 20.

Lorsqu'une telle action A est exercée, l'électronique de l'émetteur 20 est alors alimentée par la source 23 et l'unité de traitement 25 se met en fonctionnement puis décide d'émettre sur le second réseau de communication 6 un message court correspondant à l'action A effectuée. Par contre, l'émetteur 20 ne possède pas de moyens de réception et ne peut donc pas écouter les communications en cours ni recevoir de messages d'un appareil distant. Il n'est donc pas capable de dialoguer directement sur le premier réseau sans fil 5.

Optionnellement, comme le protocole du second réseau sans fil 6 ne prévoit pas de gestion du contrôle d'accès au réseau, il peut être avantageux de fiabiliser les émissions radio de l'émetteur 20. Pour cela, si l'énergie électrique produite par la source 23 est suffisante, on peut envisager que les moyens d'émission 21 émettent successivement plusieurs fois le message court correspondant à l'action A. On peut aussi envisager que ces messages courts successifs soient émis avec des intervalles de temps inter-messages différents ou pseudos aléatoires.

La passerelle 10 comprend une unité de traitement électronique 15 (telle qu'un microcontrôleur) reliée à des moyens de réception 12 et des moyens d'émission 11 permettant d'envoyer et de recevoir des messages radio, à l'aide d'une antenne 19. Le noeud distant 30 comprend également une unité de traitement reliée à des moyens de réception 32 et des moyens d'émission 31 permettant d'envoyer et de recevoir des messages radio à l'aide d'une antenne.

La passerelle 10 et le noeud distant 30 peuvent dialoguer entre eux selon le protocole de communication du premier réseau de communication 5. Selon un mode de réalisation, le protocole du premier réseau 5 est conforme à la norme IEEE 802.15.4 pour les couches réseau inférieures : couche Physique (PHY) et couche Contrôle d'accès au réseau (MAC). Alternativement, l'invention prévoit aussi d'autres modes de réalisation équivalents dans lesquels, pour les couches réseau inférieures, le protocole du premier réseau 5 pourrait être conforme notamment à la norme IEEE 802.15.4a ou à la norme IEEE 802.15.4b.

Par ailleurs, les couches supérieures du protocole de communication du premier réseau 5 sont par exemple conformes aux spécifications ZigBee (couche Réseau (NWK), couche Application).

Selon l'invention, la couche physique du protocole simplifié du second réseau 6 est identique à la couche physique du protocole évolué du premier réseau 5. Grâce à cela, les moyens de réception 12 de la passerelle 10 sont capables de recevoir aussi bien des messages provenant d'un appareil distant 30 sur le premier réseau 5, que des messages provenant d'un émetteur simple 20 sur le second réseau 6. La passerelle 10 utilise donc avantageusement le même hardware (transceiver) et la même couche physique pour recevoir des messages en provenance des deux réseaux.

Ainsi, les moyens d'émission 11 de la passerelle 10, les moyens d'émission 31 du noeud distant 30, mais aussi les moyens d'émission 21 de l'émetteur 20 émettent une onde compatible avec les fréquences et la modulation (couche physique PHY) décrite dans les normes IEEE 802.15.4, IEEE 802.15.4a ou IEEE 802.15.4b.

La figure 2 montre différentes couches de la pile logicielle (stack) exécutée par l'unité de traitement 15 de la passerelle 10 lors de la réception d'un message. Lorsqu'un message M est reçu par les moyens de réception 12, il arrive au niveau de la couche physique PHY 50. A ce stade, il n'est pas encore possible de déterminer si ce message M provient du premier réseau 5 ou du second réseau 6 de communication, puisque les couches physiques PHY des deux réseaux 5,6 sont identiques.

C'est pourquoi, pour différencier les messages et identifier leur provenance, la pile logicielle de la passerelle 10 comporte une couche supplémentaire 51, appelée couche "aiguillage" (ou switching layer), placée au-dessus de la couche physique 50. Si le message M est identifié comme provenant du premier réseau 5, il est aiguillé directement vers la couche MAC de contrôle d'accès au réseau 52 puis vers d'éventuelles couches supérieures 53 du protocole du premier réseau de communication évolué 5 (à savoir couche Réseau, couche Application,...). Si le message M est identifié comme provenant du second réseau 6, il est aiguillé vers un traitement spécifique 55 dédié aux messages provenant d'émetteurs simples.

Typiquement, la couche aiguillage 51 est donc exécutée entre la couche physique 50 et la couche MAC 52. Cependant, et notamment dans le cas de la norme IEEE802.15.4, il est aussi possible que certaines opérations de contrôle, comme l'analyse du champ CRC, soient déjà réalisées par le hardware au niveau de la couche physique 50, et donc avant l'exécution de la couche aiguillage 51.

La couche aiguillage 51 exécutée par l'unité de traitement 15 est donc capable d'analyser un en-tête contenu dans un message M reçu par la couche physique 50, de façon à détecter la présence d'une information indiquant si le message M a été émis selon le protocole simplifié du second réseau 6. Pour cela, le contenu du message M doit contenir une information spécifique au protocole simplifié utilisé pour émettre le message.

En prenant l'exemple de la norme IEEE 802.15.4, un message M conforme à cette norme présente le format suivant :
- un préambule (Preamble) codé sur quatre octets,
- un début de trame (Start Frame) codé sur un octet,
- une information de longueur de trame (Frame Length) codée sur un octet,
- une partie utile du message (MPDU) variable, fixé par exemple à une longueur de treize octets dans le mode de réalisation présenté et
- une séquence de contrôle de fin (Frame Check Sequence) codée sur deux octets.

La partie utile du message (MPDU) comporte un En-tête sur trois octets et un champ utile de dix octets. L'en-tête comporte une information d'identification du type de trame (Frame Type) qui est codée sur trois bits. Cette information permet donc d'identifier au maximum huit types de trame différents. Or, la norme IEEE 802.15.4 utilise seulement quatre types de trame différents (correspondant aux valeurs : 000 - 001 - 010 - 011 du Frame Type). Il reste donc plusieurs valeurs disponibles qui peuvent permettre de coder et d'identifier un type de trame supplémentaire correspondant à un message émis selon le protocole simplifié du second réseau 6, par exemple la valeur 111, qui en conséquence est utilisable par un émetteur simple 20 pour identifier un message émis selon un protocole de communication simplifié.

Ainsi, durant l'exécution de la couche aiguillage 51, l'unité de traitement 15 dirige un message M vers la couche spécifique 55 s'il contient une information d'identification du type de trame égale à la valeur 111, et vers les couches habituelles 52,53 si l'information d'identification du type de trame est égale à l'une des autres valeurs prévues par la norme IEEE 802.15.4.

Grâce à ce traitement simple, une passerelle 10 peut facilement détecter et aiguiller les messages émis par l'un ou l'autre des réseaux 5 et 6. De plus, ce traitement n'altère pas le mécanisme de fonctionnement du premier réseau de communication 5. En effet, si un message radio envoyé par un émetteur simple 20 est reçu par les moyens de réception 32 d'un noeud distant 30 ne comportant les fonctionnalités de la passerelle 10, alors ce message sera ignoré lors de son analyse dans la pile logicielle du noeud 30 car comportant une information d'identification du type de trame non conforme au protocole évolué du réseau 5.

La couche spécifique 55 peut être utilisée pour effectuer un traitement spécifique pour les messages M émis par des émetteurs simples 20 et propres à l'application considérée. En effet, le champ utile de dix octets peut comporter l'adresse de l'émetteur 20 expéditeur du message M sur huit octets, ainsi qu'un codage sur deux octets de l'action A génératrice du message M (par exemple un ordre de marche (ON), d'arrêt (OFF), d'incrémentation (IND), de décrémentation (DEC), etc...). La couche spécifique 55 peut également gérer la redondance entre plusieurs messages consécutifs émis par un même émetteur simple pour une même action A.

Par ailleurs, la passerelle 10 peut également comporter un actionneur 16, du type actionneur électromécanique ou autres, piloté par l'unité de traitement 15. Cet actionneur 16 commande une sortie S ou récepteur électrique (par exemple une lampe, un moteur,...). L'actionneur 16 est piloté suite à la réception d'un ordre de commande contenu dans un message M reçu par les moyens de réception 12 et provenant soit d'un émetteur simple 20, soit d'un noeud distant 30. L'unité de traitement 15 analyse et décode le message reçu M et commande l'actionneur 16 en fonction du contenu du message M.

De même, un noeud distant 30 peut également comporter un actionneur 36, du type actionneur électromécanique ou autres, lui permettant de commander une sortie S'. Grâce à l'invention, cette sortie S' peut être commandée par un émetteur simple 20 distant. Le fonctionnement est alors le suivant : suite à une action A, un émetteur simple 20 émet un ordre de commande codé dans un message M émis selon le protocole simplifié du second réseau 6. Ce message M est reçu par la passerelle 10 comme expliqué précédemment. Si l'unité de traitement 15 de la passerelle 10 détecte, en analysant l'adresse de l'expéditeur du message M durant la couche 55, que l'émetteur 20 est logiquement associé avec la sortie S' d'un noeud distant 30 pour l'application considérée, alors elle effectue une opération de routage en redirigeant ce message M vers les moyens d'émission 11 de façon à l'envoyer vers le noeud 30 selon le protocole évolué du premier réseau 5. Le noeud distant 30 reçoit et décode ce message puis commande sa sortie S' via l'actionneur 36.

Ainsi, le système de communication présenté dans l'invention permet à un émetteur simple 20, alimenté par une mini source d'énergie 23, non seulement de commander une sortie S dans le rayon d'action de sa propre antenne, mais aussi de commander une sortie S' située à distance en utilisant une passerelle de communication 10 vers un réseau de communication évolué 5. Grâce à l'invention, le coût de cette passerelle 10 reste modéré et la passerelle peut donc être intégrée dans un appareil simple. En particulier, à partir de l'actionnement d'un simple interrupteur 20 sans fil et sans pile dont la source d'énergie 23 ne provient que de la transformation de l'énergie mécanique d'actionnement en énergie électrique, on peut donc commander un actionneur, tel qu'une lampe S', situé à distance.

Il est bien entendu que l'on peut, sans sortir du cadre de l'invention, imaginer d'autres variantes et perfectionnements de détail et de même envisager l'emploi de moyens équivalents.

## Revendications

1. Passerelle de communication comprenant des moyens d'émission (11) et des moyens de réception (12) de messages pour communiquer avec au moins un noeud de communication distant (30) sur un premier réseau de communication sans fil (5) selon un protocole incluant un contrôle d'accès au réseau (MAC), **caractérisé en ce que** :
- lesdits moyens de réception (12) sont également capables de recevoir des messages en provenance d'au moins un émetteur simple (20) émettant des messages sur un second réseau de communication sans fil (6) selon un protocole n'incluant pas de contrôle d'accès au réseau (MAC), les protocoles du premier réseau de communication (5) et du second réseau de communication (6) utilisant la même couche physique (PHY),
- la passerelle (10) comprend une unité de traitement (15) associée audits moyens d'émission (11) et audits moyens de réception (12), capable de différencier les messages reçus provenant du premier réseau (5) et les messages reçus provenant du second réseau (6), en analysant une information d'en-tête contenue dans les messages reçus.

2. Passerelle de communication selon la revendication 1, **caractérisé en ce que** le protocole du premier réseau de communication (5) est conforme à la norme IEEE 802.15.4 ou la norme IEEE 802.15.4a ou la norme IEEE 802.15.4b.

3. Passerelle de communication selon la revendication 2, **caractérisé en ce que** la couche physique (PHY) du protocole du second réseau de communication (6) est conforme à la couche physique (PHY) de la norme IEEE 802.15.4 ou la norme IEEE 802.15.4a ou la norme IEEE 802.15.4b.

4. Passerelle de communication selon la revendication 1, **caractérisé en ce qu'**elle comporte un actionneur (16) qui est commandé par l'unité de traitement (15) suite à la réception d'un ordre de commande contenu dans un message (M) provenant du premier réseau (5) ou du second réseau de communication (6).

5. Passerelle de communication selon l'une des revendications 1 à 4, **caractérisé en ce que** l'unité de traitement (15) est capable de rediriger un message reçu provenant du second réseau (6) vers les moyens d'émission (11) du premier réseau (5).

6. Système de communication comprenant :
- une passerelle (10) comportant des moyens d'émission (11) et des moyens de réception (12) de messages via un premier réseau de communication sans fil (5) selon un protocole incluant un contrôle d'accès au réseau (MAC),
- au moins un noeud de communication distant (30) capable de communiquer avec la passerelle (10) sur le premier réseau de communication sans fil (5),
- au moins un émetteur simple (20) capable d'émettre des messages sur un second réseau de communication sans fil (6) selon un protocole n'incluant pas de contrôle d'accès au réseau (MAC),
**caractérisé en ce que**
- lesdits moyens de réception (12) de la passerelle (10) sont également capables de recevoir des messages en provenance dudit émetteur simple (20),
- la passerelle (10) comprend une unité de traitement (15) associée audits moyens de réception (12) et capable de différencier les messages reçus provenant du premier réseau (5) et les messages reçus provenant du second réseau de communication (6), en analysant une information d'en-tête contenue dans les messages reçus.

7. Système de communication selon la revendication 6, **caractérisé en ce que** le protocole du premier réseau de communication (5) est conforme à la norme IEEE 802.15.4 ou la norme IEEE 802.15.4a ou la norme IEEE 802.15.4b.

8. Système de communication selon la revendication 7, **caractérisé en ce que** la couche physique (PHY) du protocole du second réseau de communication (6) est conforme à la couche physique (PHY) de la norme IEEE 802.15.4 ou la norme IEEE 802.15.4a ou la norme IEEE 802.15.4b.

9. Système de communication selon la revendication 6, **caractérisé en ce que** l'émetteur simple (20) est alimenté électriquement par un convertisseur d'énergie mécanique en énergie électrique (23).

10. Système de communication selon la revendication 6, **caractérisé en ce que** la passerelle (10) comporte un actionneur (16) qui est susceptible d'être commandé suite à la réception d'un ordre de commande contenu dans un message provenant du premier réseau (5) ou du second réseau de communication (6).

11. Système de communication selon la revendication 6, **caractérisé en ce que** le noeud de communication distant (30) comporte un actionneur (36) qui est susceptible d'être commandé par un ordre de commande contenu dans un message émis par l'émetteur simple (20) sur le second réseau de communication (6) et retransmis par la passerelle (10) vers le noeud de communication distant (30) via le premier réseau de communication (5).

12. Système de communication selon l'une des revendications 6 à 11, **caractérisé en ce que** l'unité de traitement (15) est capable de rediriger un message reçu provenant du second réseau (6) vers les moyens d'émission (11) du premier réseau (5).
